# EUROPÄISCHE PATENTSCHRIFT

(11) **EP 0 331 020 B1**
(45) Veröffentlichungstag und Bekanntmachung des Hinweises auf die Patenterteilung: **19.05.1993**
(21) Anmeldenummer: 89103208.8
(22) Anmeldetag: 23.02.1989
(51) Int. Cl.: B01D 33/044

(54) **Filtervorrichtung zum Filtern von Flüssigkeiten**
Filtering device for the filtration of liquids
Dispositif filtrant pour la filtration des liquides

(30) Priorität: 01.03.1988 DE 3806494
(43) Veröffentlichungstag der Anmeldung: 06.09.1989
(73) Patentinhaber: DIPL.-ING. ERICH FETZER GMBH & CO., D-72770 Reutlingen (DE)
(72) Erfinder: Wagner, Jürgen, D-7410 Reutlingen 2 (DE)
(74) Vertreter: Ott, Elmar, Dipl.-Ing.

(56) Entgegenhaltungen:
- DE-U- 8 408 211
- GB-A- 1 015 898
- US-A- 4 294 700
- US-A- 4 724 077

## Beschreibung

Die Erfindung betrifft eine Filtervorrichtung zum Filtern von Flüssigkeiten gemäß des Oberbegriffs des Hauptanspruchs.

Aus dem deutschen Gebrauchsmuster DE-U-84 08 211 ist eine Filtervorrichtung bekannt, bei der die zu filternde Flüssigkeit axial über eine Hohlachse in den Filterbereich geleitet wird. Der Filterbereich wird durch seitliche Scheiben und ein über eine Kreisbogenbahn geführtes Filtertuch begrenzt. Die seitlichen Scheiben sind auf der Hohlachse gelagert und drehen sich während des Filtervorganges in gleichem Maße, wie das Filtertuch weitertransportiert wird. Bei dieser bekannten Filtervorrichtung ist es besonders nachteilig, daß die axiale Zufuhr der zu filternden Flüssigkeiten den Flüssigkeitsspiegel begrenzt. Der Flüssigkeitsspiegel darf nicht höher steigen als die Unterkante der Hohlachse, um ein Rückströmen der Flüssigkeit zu vermeiden. Außerdem kann die Eintrittsöffnung nicht an unterschiedliche Erfordernisse angepaßt werden, da die Einlauföffnung durch die Konstruktion der Hohlachse nicht beliebig ausgebildet werden kann.

Der Erfindung liegt die Aufgabe zugrunde, eine Filtervorrichtung der eingangs genannten Gattung derart weiterzubilden, daß die Einlauföffnung für die Zufuhr der zu filternden Flüssigkeiten in Form und Position entsprechend unterschiedlichen Anforderungen auf einfache Weise angepaßt werden kann. Die Lösung dieser Aufgabe wird durch die im Kennzeichen des Hauptanspruchs angegebenen Merkmale erhalten. Der Filterbereich wird durch feststehende seitliche Wandungen begrenzt. Das entlang einer Kreisbogenbahn geführte Filtertuch liegt an einem drehbar gelagerten Ring an, der sich entsprechend dem Weitertransport des Filterbandes zusammen mit diesem mitdreht. Dadurch wird einerseits erreicht, daß das Filtertuch an einem sich mitdrehenden Element gelagert ist und sich ungehindert entlang der Kreisbogenbahn bewegen kann, und andererseits im Bereich der Wandungen innerhalb der Ringe an nahezu beliebiger Stelle eine runde oder rechteckige Einlauföffnung ausgebildet werden kann. Durch die Einlauföffnung kann auch ein flaches oder rundes Einlaufrohr oder dergleichen eingeführt werden, dessen Austrittsöffnung so positioniert werden kann, daß ein gewünschter Abstand vom Filtertuch eingehalten wird.

Die Umfangsfläche der drehbar gelagerten Ringe ist vorzugsweise von einem elastischen Dichtungselement gebildet, an dem das Filtertuch mit seinem gegenüberliegenden Seitenrändern anliegt. In Verbindung mit einem O-Ring, der zwischen einem Lagerinnenring und dem drehbar gelagerten Ring angeordnet ist, wird eine gute Abdichtung zwischen Filtertuch und der Wandung der Filtervorrichtung erreicht.

Der O-Ring kann in eine Ringnut am drehbaren Ring oder in eine Ringnut einer zugehörigen Seitenscheibe eingesetzt sein. Dabei kann der O-Ring radial gegen den drehbaren Ring oder axial gegen einen Seitenflansch als Dichtungselement drücken.

In besonders vorteilhafter Weise kann die Filtervorrichtung als Lagerelement für die drehbaren Ringe jeweils ein kreisbogenförmiges Ringsegment verwenden. Vorzugsweise werden hierfür zwei Ringhälften verwendet, an denen jeweils ein drehbarer Ring anliegt. Die starr mit dem Filtergehäuse verbundene Ringhälfte kann dabei so angeordnet werden, daß ihre beiden freien Enden nach oben weiten und der drehbare Ring von unten gegen die äußere Umfangsfläche der Ringhälfte gedrückt wird. Um eine ausreichend große Andruckkraft zu erhalten, kann an einer der Umlenkrollen des Gitterstützbandes eine Zugfeder angeordnet sein, die das Gitterstützband und damit die am Gitterstützband anliegenden drehbaren Ringe nach oben drückt. Durch die Verwendung von zwei Ringhälften als Lagerelemente halbieren sich die Kosten für diese Lagerelemente gegenüber ganzen Lagerringen.

Um eine Entwässerung des am Filtertuch verbleibenden Schlamms zu erreichen, kann eine Feuchtigkeitsabsaugeinrichtung vorgesehen sein. Der entwässerte Schlamm kann dann mittels eines Abstreifers vom Filtertuch abgehoben und in einen Behälter eingeleitet werden, während das von groben Rückständen befreite Filtertuch auf einer Rolle aufgewickelt werden kann.

Vorteilhafte Weiterbildungen der Erfindung sind in den Unteransprüchen gekennzeichnet.

Die Erfindung wird nachfolgend anhand der Zeichnung näher erläutert. Es zeigen:
Figur 1 die Stirnseite der Filtervorrichtung,
Figur 2 die Seitenansicht der in Figur 1 dargestellten Filtervorrichtung,
Figur 3 die Draufsicht der in Figur 1 dargestellten Filtervorrichtung,
Figur 4 ein Querschnitt im Bereich des drehbar gelagerten Rings mit radialer Abdichtung,
Figur 5 einen Querschnitt im Bereich des drehbar gelagerten Rings mit axialer Abdichtung,
Figur 6 die prinzipielle Anordnung der Lagerringe und der drehbaren Ringe in der Filtervorrichtung und
Figur 7 ein weiteres Ausführungsbeispiel, bei dem als Lagerelemente für die drehbaren Ringe Ringhälften verwendet werden.

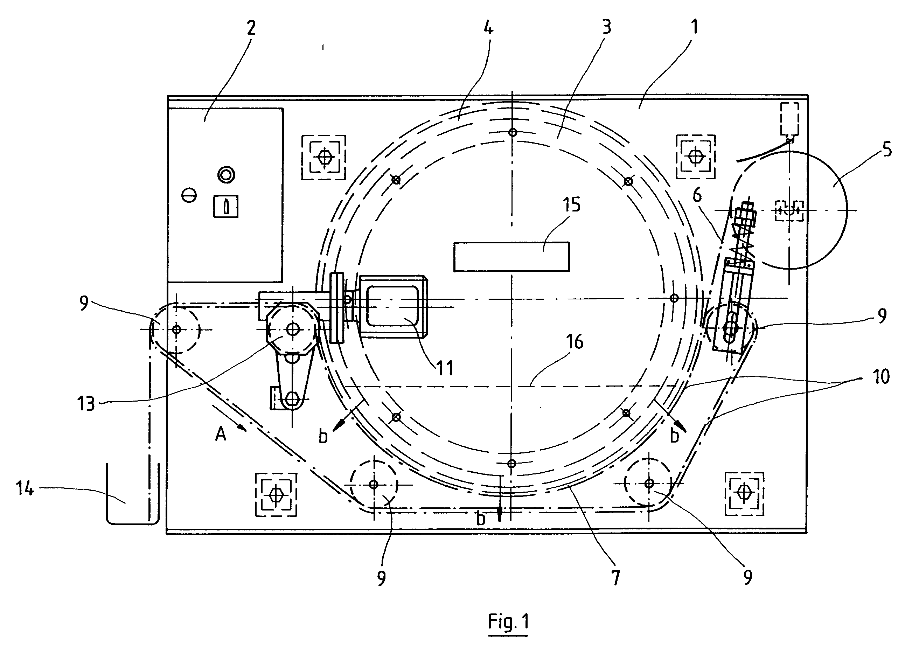

Die in Figur 1 dargestellte Filtervorrichtung besitzt ein Gehäuse 1, an dem ein Schaltkasten 2 angebracht ist. Die innerhalb des Gehäuses 1 vorgesehenen Einrichtungen sind mit unterbrochenen Linien dargestellt.

Im Gehäuse 1 befindet sich an der Wandung ein Lagerinnenring 3, an dem außen ein drehbar gelagerter Ring 4 angeordnet ist. Entlang dem Ring 4 wird das von einer Vorratsrolle 5 kommende Filtertuch 6 entlang einer Kreisbogenbahn 7 geführt und dabei von einem über Umlenkrollen 9 umlaufenden Gitterstützband 10 gestützt. Das Gitterstützband 10 wird über einen Elektromotor 11 und eine Antriebsrolle 13 angetrieben. Das Gitterstützband 10 bewegt sich dadurch in Pfeilrichtung A, wodurch gleichermaßen das Filtertuch 6 und damit auch der Ring 4 bewegt werden.

Das verschmutzte Filtertuch 6 gelangt in einen vereinfacht dargestellten Behälter 14.

In der Seitenscheibe 3 ist eine rechteckige Einlauföffnung 15 vorgesehen, durch die die zu filternden Flüssigkeit über ein hier nicht dargestelltes Einlaufrohr oder einen Einlaufkanal zugeführt wird.

Die gefiltere Flüssigkeit tritt an der Unterseite des entlang der Kreisbogenbahn geführten Filtertuchs 6 entsprechend der Pfeilrichtung b aus. Die gefilterte Flüssigkeit kann in einer Auffangwanne gesammelt und abgeleitet werden. Die während des Filtervorgangs in der Filtervorrichtung befindliche zu filternde Flüssigkeit kann beispielsweise den in der Zeichnung dargestellten Flüssigkeitsspiegel 16 haben. Der Flüssigkeitsspiegel 16 kann jedoch auch deutlich höher sein.

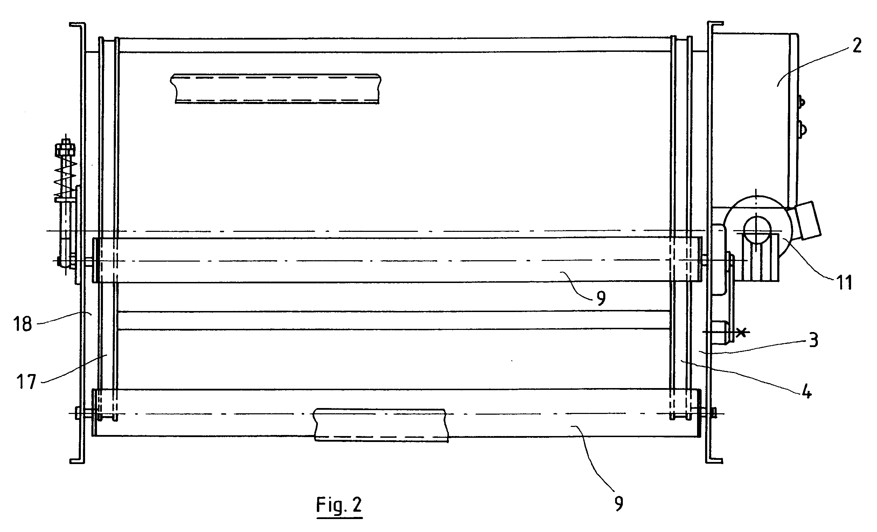

In Figur 2 sind in der Seitenansicht der Schaltkasten 2, der Elektromotor 11, Umlenkrollen 9 und zwei seitliche Ringe 4, 17 ersichtlich. Die Ringe 4, 17 sind auf entsprechenden seitlichen Lagerinnenringen 3, 18 drehbar gelagert.

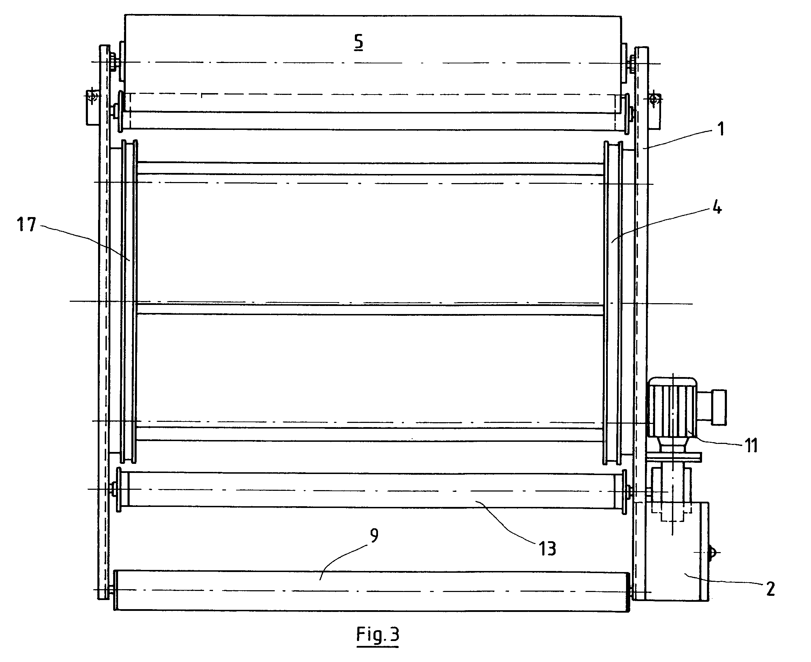

In Figur 3 ist die Filtervorrichtung in der Draufsicht gezeigt. Hier ist auch die Filtertuchrolle 5 ersichtlich, deren Breite an den Abstand der Ringe 4, 17 angepaßt ist.

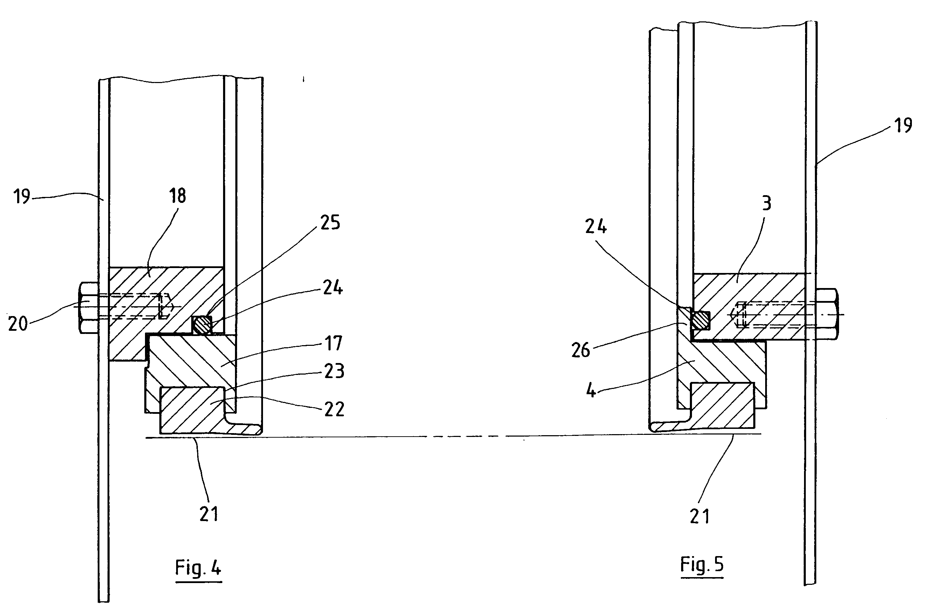

In Figur 4 ist der Querschnitt im Bereich eines drehbar gelagerten Ringes 17 dargestellt. An der Wandung 19, die Teil des Gehäuses der Filtervorrichtung ist, ist der Lagerinnenring 18 mittels Schrauben 20 montiert. Die äußere Ringfläche 21 des drehbar gelagerten Rings 17 wird von einem elastischen Dichtungselement 22 gebildet, welches in eine Nut 23 am Ring 17 eingesetzt ist.

Um eine gute Abdichtung zwischen Lagerinnenring 18 und Ring 17 zu erhalten, ist hier ein O-Ring 24 in eine Ringnut 25 eingesetzt. Der O-Ring 24 kann aus einer Rundschnur bestehen.

Eine andere Ausführung der Abdichtung ist in Figur 5 dargestellt, wo der O-Ring 24 axial gegen einen Seitenflansch 26 drückt.

Anstelle der Wandung 19 mit angeschraubtem Innenring 18 bzw. Innenring 3 kann auch eine starr angeordnete Seitenscheibe Verwendung finden, deren Umfangsfläche die innere Lagerfläche bildet, an der der drehbar gelagerte Ring 17 bzw. 4 drehbar gelagert ist.

Unterhalb des Filterbereichs kann mittels einer Pumpe, eines Gebläses oder mittels eines Verdichters ein Unterdruck erzeugt werden, der eine Beschleunigung des Filtervorgangs bewirkt.

Als Dichtungselement kann ein im Querschnitt runder O-Ring oder auch im Querschnitt andere Dichtungsringe Verwendung finden. So kann auch ein in eine Nut eingesetzter Filzring als Dichtungselement Verwendung finden.

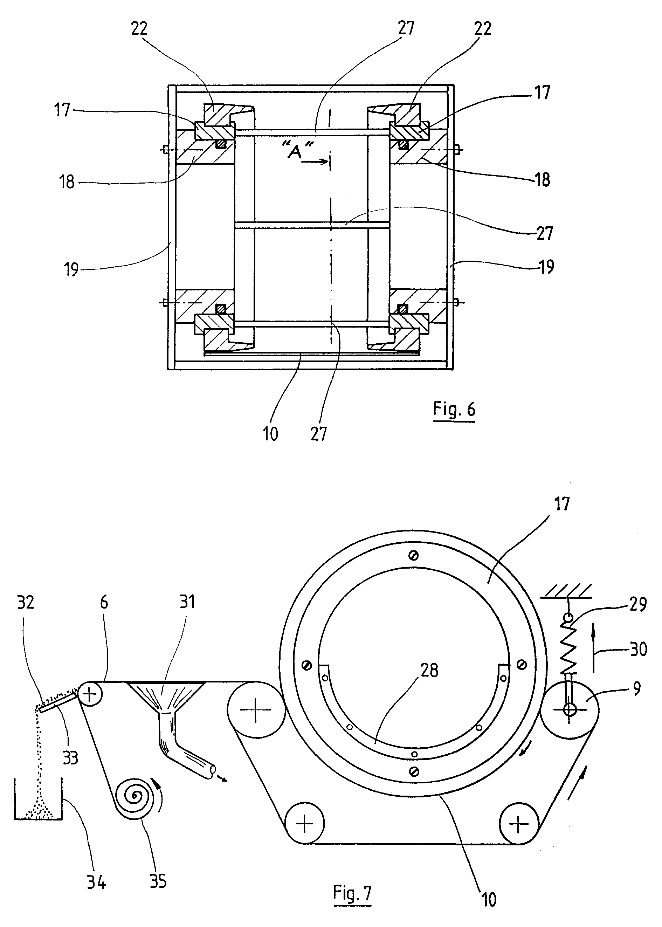

In Figur 6 ist die prinzipielle Anordnung der Lagerinnenringe 18, die an Wandungen 19 festgeschraubt sind, und der drehbar gelagerten Ringe 17 dargestellt. Die drehbaren Ringe 17 sind über mehrere Querstreben 27 miteinander verbunden.

In Figur 7 ist die Ansicht "A" gemäß Figur 6 dargestellt, allerdings unterscheidet sich die Ausführung von Figur 7 gegenüber der Ausführung von Figur 6 dadurch, daß anstelle eines Lagerinnenrings eine Ringhälfte 28 verwendet wird, an die der drehbar gelagerte Ring 17 vom Gitterstützband 10 angedrückt wird. Das Gitterstützband 10 wird zu diesem Zweck über eine Umlenkrolle 9 geführt, die von einer Zugfeder 29 in Pfeilrichtung 30 gezogen wird. Die Zugfeder 29 besitzt eine so hohe Federkraft, daß dadurch die beidseitig am Gitterstützband 10 aufliegenden drehbaren Ringe 17 nach oben gegen die zugeordneten Ringhälften 28 angedrückt werden.

An den Filterbereich grenzt zur Schlammentwässerung eine Feuchtigkeitsabsaugeinrichtung 31 an, die es ermöglicht, daß der entwässerte Schlamm 32 mittels eines Abstreifers 33 vom Filtertuch 6 angehoben und einem Auffangbehälter 34 zugeführt werden kann. Das Filtertuch 6 läßt sich nun mittels eines hier nicht mehr dargestellten Elektromotors zu einer Rolle 35 aufwickeln. Die Schlammentwässerung erleichtert die Entsorgung des Schlammes und des verbrauchten Filtertuchs.

## Patentansprüche

1. Filtervorrichtung zum Filtern von Flüssigkeiten mit einem entlang einer Kreisbogenbahn geführten Filtertuch (6), das dadurch einen rinnenförmigen Filterbereich bildet, und mit Wandungen (19), die den rinnenförmigen Filterbereich an dessen beiden Stirnseiten begrenzen, **dadurch gekennzeichnet,** daß die beiden Wandungen (19) feststehende Teile der Filtervorrichtung sind, daß an jeder der Wandungen (19) ein Ring (4, 17) drehbar gelagert ist, an dessen Umfangsfläche das Filtertuch (6) kreisbogenförmig anliegt, und daß die zu filternde Flüssigkeit durch eine in einer der seitlichen Wandungen (19) befindliche Aussparung (15) zugeführt wird.

2. Filtervorrichtung nach Anspruch 1, **dadurch gekennzeichnet,** daß an jeder Wandung (19) ein Lagerinnenring (3, 18) angebracht ist, an dem die drehbaren äußeren Ringe (4, 17) gelagert sind.

3. Filtervorrichtung nach einem der Ansprüche 1 oder 2, **dadurch gekennzeichnet,** daß an der Umfangsfläche der drehbaren RInge (4, 17) eine äußere Ringfläche (21) von einem elastischen Dichtungselement (22) gebildet ist.

4. Filtervorrichtung nach einem der vorhergehenden Ansprüche, **dadurch gekennzeichnet,** daß als Abdichtung zwischen feststehenden Teilen (3, 18; 19) und drehbarem Ring (4; 17) jeweils wenigstens ein O-Ring (24) dient, der vorzugsweise als eine in eine Ringnut (25) eingesetzte Rundschnur ausgebildet ist.

5. Filtervorrichtung nach Anspruch 4, **dadurch gekennzeichnet,** daß der O-Ring (24) radial gegen die innere Ringfläche des drehbar gelagerten Rings (17) drückt.

6. Filtervorrichtung nach Anspruch 4, **dadurch gekennzeichnet,** daß der O-Ring (24) axial gegen eine am drehbar gelagerten Ring (4) ausgebildeten Seitenflansch (26) drückt.

7. Filtervorrichtung nach einem der vorhergehenden Ansprüche, **dadurch gekennzeichnet,** daß eine rechteckige Aussparung (15) in der oberen Hälfte der als Scheibe ausgebildeten Wandung (19) vorgesehen ist.

8. Filtervorrichtung nach einem der vorhergehenden Ansprüche, **dadurch gekennzeichnet,** daß das Filtertuch (6) von einem umlaufenden Gitterstützband (10) unterstützt ist.

9. Filtervorrichtung nach einem der vorhergehenden Ansprüche, **dadurch gekennzeichnet,** daß die seitlichen Wandungen (19), von feststehenden Kreisscheiben gebildet sind, deren Umfangsflächen die Lagerflächen für die drehbaren Ringe (4, 17) bilden.

10. Filtervorrichtung nach einem der vorhergehenden Ansprüche, **dadurch gekennzeichnet,** daß unterhalb des Filterbereichs Unterdruck mittels einer Pumpe oder eines Verdichters erzeugt wird.

11. Filtervorrichtung nach einem der Ansprüche 3, 5 oder 6, **dadurch gekennzeichnet,** daß das Dichtungselement (22) ein aus Filz bestehender Dichtungsring ist.

12. Filtervorrichtung nach einem der Ansprüche 1, 3, 4, 7, 8, 10 und 11, **dadurch gekennzeichnet,** daß die drehbaren Ringe (4, 17) an jeweils einem kreisbogenförmigen Ringsegment (28) gelagert sind, das an der Wandung (19) befestigt ist.

13. Filtervorrichtung nach Anspruch 12, **dadurch gekennzeichnet,** daß die Ringsegmente jeweils aus einer Ringhälfte (28) bestehen, deren Enden nach oben zeigen und an die der zugehörige drehbare Ring (17) von unten angedrückt wird.

14. Filtervorrichtung nach Anspruch 13, **dadurch gekennzeichnet,** daß das am drehbaren Ring (17) anliegende Gitterstützband (10) gespannt ist und den Ring (17) an die Ringhälfte (28) drückt.

15. Filtervorrichtung nach einem der vorhergehenden Ansprüche, **dadurch gekennzeichnet,** daß das Filtertuch nach dem Filterbereich an einer Feuchtigkeitsabsaugeinrichtung (31) vorbeiläuft, mittels eines Abstreifers (33) von groben Rückständen befreit wird und anschließend zu einer Rolle (35) aufgewickelt wird.

## Claims

1. Filtering device for filtering liquids with a filter cloth (6) guided along a circular path, which cloth forms thereby a channel-shaped filtering region, and with walls (19) which bound the channel-shaped filtering region at the two end faces thereof, characterized in that the two walls (19) are fixed parts of the filtering device, that on each of the walls (19) there is rotatably mounted a ring (4, 17), adjacent the circumferential face of which the filtering cloth (6) lies in the form of an arc of a circle, and that the liquid to be filtered is supplied through an opening (15) located in one of the lateral walls (19).

2. A filtering device according to claim 1, characterized in that an inner bearing ring (3, 18) on which the outer rings (4, 17) are rotatably mounted is attached to each wall (19).

3. A filtering device according to one of claims 1 or 2, characterized in that on the circumferential face of the rotatable rings (4, 17) an outer annular face (21) is formed by a resilient sealing element (22).

4. A filtering device according to one of the preceding claims, characterized in that at least one respective O-ring (24), which is preferably in the form of a round cord inserted in an annular groove (25), serves as the seal between fixed parts (3, 18; 19) and rotatable ring (4; 17).

5. A filtering device according to claim 4, characterized in that the O-ring (24) presses radially against the inner annular face of the rotatably mounted ring (17).

6. A filtering device according to claim 4, characterized in that the O-ring (24) presses axially against a lateral flange (26) formed on the rotatably mounted ring (4).

7. A filtering device according to one of the preceding claims, characterized in that a rectangular opening (15) is provided in the upper half of the wall (19) in the form of a disc.

8. A filtering device according to one of the preceding claims, characterized in that the filter cloth (6) is supported by a circulating grid support belt (10).

9. A filtering device according to one of the preceding claims, characterized in that the lateral walls (19) are formed by fixed circular discs, the circumferential faces of which form the bearing faces for the rotatable rings (4, 17).

10. A filtering device according to one of the preceding claims, characterized in that a vacuum is generated beneath the filtering region by means of a pump or a compressor.

11. A filtering device according to one of claims 3, 5 or 6, characterized in that the sealing element (22) is a sealing ring consisting of felt.

12. A filtering device according to one of claims 1, 3, 4, 7, 8, 10 and 11, characterized in that the rotatable rings (4, 17) are mounted on a respective circular arc-shaped annular segment (28) which is fixed to the wall (19).

13. A filtering device according to claim 12, characterized in that each of the annular segments consists of a ring half (28), the ends of which point upwards and against which the associated rotatable ring (17) is pressed from below.

14. A filtering device according to claim 13, characterized in that the grid support belt (10) lying adjacent to the rotatable ring (17) is tensioned and presses the ring (17) against the ring half (28).

15. A filtering device according to one of the preceding claims, characterized in that after the filtering region the filter cloth moves past a moisture-extraction arrangement (31), has coarse residues removed from it by means of a scraper (33) and is subsequently wound into a roll (35).

## Revendications

1. Dispositif filtrant pour filtrer des liquides, ce dispositif comprenant une étoffe filtrante (6) guidée le long d'un trajet en arc de cercle, qui forme ainsi une zone filtrante en forme de canal, et comportant des parois (19) qui délimitent sur ses deux côtés frontaux la zone filtrante en forme de canal, dispositif caractérisé en ce que les deux parois (19) constituent des parties fixes du dispositif filtrant ; en ce que, sur chacune des parois (19), est montée rotative une bague (4, 17), sur la surface périphérique de laquelle l'étoffe filtrante (6) est appliquée en arc de cercle ; et en ce que le liquide à filtrer est acheminé (vers ce dispositif) en empruntant un évidement (15) situé dans l'une des parois (19) latérales.

2. Dispositif filtrant selon la revendication 1, caractérisé en ce que, sur chaque paroi (19) est disposée une bague (3, 18) intérieure de positionnement sur laquelle sont montées les bagues (4, 17) extérieures rotatives.

3. Dispositif filtrant selon l'une des revendications 1 ou 2, caractérisé en ce que, sur la surface périphérique des bagues (4, 17) rotatives est formée une surface annulaire (21) extérieure d'un élément (22) élastique d'étanchement.

4. Dispositif filtrant selon l'une des revendications précédentes, caractérisé en ce que, comme organe d'étanchement entre des parties fixes (3, 18, 19) et une bague rotative (4, 17), sert à chaque fois au moins une bague torique (24) qui est avantageusement réalisée sous forme d'une ganse introduite dans une gorge annulaire (25).

5. Dispositif filtrant selon la revendication 4, caractérisé en ce que la bague (24) appuie radialement contre la surface annulaire interne de la bague (17) montée rotative.

6. Dispositif filtrant selon la revendication 4, caractérisé en ce que la bague torique (24) appuie axialement contre un rebord latéral (26) formé sur la bague (4) montée rotative.

7. Dispositif filtrant selon l'une des revendications précédentes, caractérisé en ce qu'on prévoit un évidement (15) rectangulaire dans une moitié supérieure de la paroi (18) en forme de disque.

8. Dispositif filtrant selon l'une quelconque des revendications précédentes, caractérisé en ce que l'étoffe filtrante **(6) est supportée par une bande (10) périphérique de treillis de support.**

9. Dispositif filtrant selon l'une des revendications précédentes, caractérisé en ce que les parois (19) latérales sont formées par des disques circulaires fixes dont les surfaces périphériques constituent les surfaces d'appui pour le montage des bagues (4, 17) rotatives.

10. Dispositif filtrant selon l'une des revendications précédentes, caractérisé en ce que, au-dessous de la zone de filtration, une dépression est produite à l'aide d'une pompe ou d'un compresseur.

11. Dispositif filtrant selon l'une des revendications 3, 5 ou 6, caractérisé en ce que l'élément (22) d'étanchement est une bague d'étanchéité constituée par du feutre.

12. Dispositif filtrant selon l'une des revendications 1, 3, 4, 7, 8, 10 et 11, caractérisé en ce que les bagues (4, 17) rotatives sont montées sur un élément annulaire (28) ayant à chaque fois une forme d'arc de cercle et qui est fixé sur la paroi (19).

13. Dispositif filtrant selon la revendication 12, caractérisé en ce que les segments annulaires consistent à chaque fois en une moitié (28) de bague ou d'anneau dont les extrémités sont dirigées vers le haut et qui est appuyée vers le bas contre la bague rotative (17) associée.

14. Dispositif filtrant selon la revendication 13, caractérisé en ce que la bande (10) de support en forme de treillis, appuyée sur la bague (17) rotative, est sous tension mécanique et appuie la bague (17) sur la moitié (28) de bague ou d'anneau.

15. Dispositif filtrant selon l'une des revendications précédentes, caractérisé en ce que l'étoffe filtrante passe, après la zone de filtration, devant une installation (31) d'aspiration d'humidité, est débarrassée, à l'aide d'une racle (33), des gros résidus et est ensuite enroulée pour former un rouleau (35).
